Europäisches Patentamt

European Patent Office

Office européen des brevets

(19)

(11) Veröffentlichungsnummer: **0 066 880**
**A2**

(12) ## EUROPÄISCHE PATENTANMELDUNG

(21) Anmeldenummer: 82104984.8

(22) Anmeldetag: 08.06.82

(51) Int. Cl.³: **C 09 C 3/10,** C 23 F 15/00,
C 09 D 5/08

(30) Priorität: 10.06.81 DE 3122907

(43) Veröffentlichungstag der Anmeldung: 15.12.82
Patentblatt 82/50

(84) Benannte Vertragsstaaten: **AT BE CH DE FR GB IT LI NL
SE**

(71) Anmelder: Herberts Gesellschaft mit beschränkter
Haftung, Christbusch 25, D-5600 Wuppertal 2 (DE)

(72) Erfinder: Sadowski, Fritz, Dr. rer. nat. Dipl.-Ing., Am
Mühlenacker 35, D-5024 Brauweiler bei Köln (DE)

(74) Vertreter: Türk, Dietmar, Dr. rer. nat. et al, Redies,
Redies, Türk & Gille Patentanwälte Brucknerstrasse 20,
D-4000 Düsseldorf 13 (DE)

(54) Korrosionsschutzpigment, dessen Verwendung in Beschichtungsstoffen und dieses enthaltende Beschichtungsstoffe.

(57) Korrosionsschutzpigment, das an einem pulverförmigen Trägerstoff einen oder mehrere an sich bekannte Korrosionsinhibitoren reversibel fixiert enthält. Die Erfindung betrifft auch die Verwendung dieses Korrosionsschutzpigments in Beschichtungsstoffen für Metalle sowie Beschichtungsstoffe für Metalle, die dieses Korrosionsschutzpigment enthalten.

EP 0 066 880 A2

ACTORUM AG

COMPLETE DOCUMENT

T 31 120

Anmelder: Herberts Gesellschaft mit beschränkter Haftung
Christbusch 25, 5600 Wuppertal 2

Korrosionsschutzpigment, dessen Verwendung in Beschichtungsstoffen und dieses enthaltende Beschichtungsstoffe

Die vorliegende Erfindung betrifft ein Korrosionsschutzpigment, dessen Verwendung in Beschichtungsstoffen und
dieses Korrosionsschutzpigment enthaltende Beschichtungsstoffe.

Der Korrosionsschutz von Metallen durch Beschichtungsstoffe resultiert aus einer guten Haftung des Beschichtungs-
stoff-films auf dem Untergrund, einer Behinderung des
Vordringens von Wasser und Sauerstoff zum Untergrund und/
oder einer Passivierung oder Inhibierung des zu schützenden
Untergrundes gegen Korrosion.

Die Passivierung und Inhibierung des zu schützenden Untergrundes gegen Korrosion wird in der Regel durch den Zusatz
aktiver Korrosionsschutzpigmente erreicht. Besonders breite
praktische Anwendung finden die Rostschutzpigmente, weil
technisch am bedeutsamsten der Schutz von Eisen und Stahl
gegen Korrosion, d.h. Rostbildung ist. Als Rostschutzpigmente werden in großem Umfang Blei- oder Chrom-Verbindungen in mehr oder weniger löslicher Form eingesetzt.
Diese sind jedoch aus physiologischen Gründen unerwünscht.
Als Korrosionsschutzpigmente für andere Metalle, wie Aluminium oder Zink werden z.B. Zinkchromat oder Zinkphosphat
eingesetzt.

Es sind andererseits viele Korrosionsinhibitoren bekannt,
die Flüssigkeiten zugesetzt werden, u-m den Flüssigkeitsbehälter vor Korrosion zu schützen.

-2-

Technisch besonders große Bedeutung besitzen organische Korrosionsinhibitoren.

Man hat versucht, diese Korrosionsinhibitoren in Beschichtungsstoffe einzuarbeiten und damit Korrosionsschutzschichten zu erzeugen. Dieser Versuch brachte jedoch keinen Erfolg. Als Ursache für dieses Versagen muß die Tatsache angesehen werden, daß in dem Beschichtungsfilm eindringende Feuchtigkeit nur in geringem Maße durch das Bindemittel diffundiert. Der hauptsächliche Transportweg für Wasser und Sauerstoff verläuft entlang der Grenzfläche Korrosionsschutzpigment/Bindemittel. Ein Korrosionsinhibitor kann somit nur dann wesentlich wirksam werden, wenn er an dieser Grenzfläche angereichert ist und mit Wasser in Berührung kommt. Wenn sich jedoch der Korrosionsinhibitor nur im Bindemittel in gelöster Form befindet, liegt eine solche Grenzfläche nicht vor, und die örtliche Konzentration ist zu gering.

Der vorliegenden Erfindung liegt die Aufgabe zugrunde ein Korrosionsschutzpigment zu finden, das physiologisch unbedenklich oder erheblich unbedenklicher als die bekannten Blei- oder Chrompigmente ist, und das andererseits Beschichtungsstoffen eine vorzügliche Korrosionsschutzwirkung verleiht.

Gegenstand der vorliegenden Erfindung ist ein Korrosionsschutzpigment, das dadurch gekennzeichnet ist, daß es an einem pulverförmigen Trägerstoff einen oder mehrere an sich bekannte einen Korrosionsinhibitoren reversibel fixiert enthält.

Als pulverförmiger Trägerstoff im Sinne der vorliegenden Erfindung kommen grundsätzlich alle pulverförmigen Stoffe in Frage, die als Füllstoffe oder Pigmente in Beschichtungsstoffen eingesetzt werden könnten. Wesentlich ist also, daß diese pulverförmigen Trägerstoffe in den Bestandteilen des
Beschichtungsstoffes, insbesondere den Lösungsmitteln und
Bindemitteln, nicht oder zumindest im wesentlichen nicht
löslich sind. Die Korngröße der pulverförmigen Trägerstoffe
kann in den gleichen Größenordnungen liegen, wie sie bei
Füllstoffen und Pigmenten für Beschichtungsstoffe liegt,
d.h. zweckmäßig 0,01 - 100 $\mu m\emptyset$. Bevorzugt liegt die
mittlere Korngröße der pulverförmigen Trägerstoffe unter 10
$\mu m\emptyset$, vorzugsweise unter 1 $\mu m$ $\emptyset$.

Vorzugsweise wird als pulverförmiger Trägerstoff ein oberflächenaktiver Stoff verwendet. Der Trägerstoff besitzt
zweckmäßig eine spezifische Oberfläche von mehr als 10,
vorzugsweise von mehr als 50 $m^2/g$. Der Grund hierfür liegt
darin, daß ein oberflächenaktiver Stoff bzw. ein Stoff
mit hoher spezifischer Oberfläche befähigt ist eine relativ
große Menge an Korrosionsinhibitor an der Oberfläche reversibel zu fixieren.

Beispiele für pulverförmige Trägerstoffe sind Kieselgur,
Kieselgel, Ruß, Aktivkohle und sonstige Stoffe, wie sie
auch als Füllstoffe in Beschichtungsstoffen eingesetzt
werden könnten. Weiterhin können als pulverförmige Trägerstoffe eingesetzt werden Pigmente, z.B. Eisenoxid, Zinkoxid .

Auch organische Stoffen können verwendet werden, wie Korkmehl, Kautschukmehl, Holzmehl, Kunststoffpulver.

Es ist auch möglich pulverförmige Trägerstoffe zu verwenden,
die eine besondere Behandlung erfahren haben, aufgrund
derer sie befähigt sind, die Korrosionsinhibitoren in zumindest teilweise reversibler Weise zu fixieren. In diesem
Sinne können pulverförmige Trägerstoffe mit Harzen, Kunstharzen, Wachsen usw. gecoated sein, die die Korrosionsinhibitoren mittelbar gebunden oder gelöst enthalten.

0066880

Unter dem Begriff "reversibel fixiert" im Sinne der
vorliegenden Erfindung wird verstanden, daß die Korrosionsinhibitoren derart fixiert sind, daß sie nach Fertigstellung
des Beschichtungsfilms innerhalb des Films vom pulverförmigen Trägerstoff zumindest teilweise freigegeben werden,
wenn Wasser durch den Beschichtungsfilm wandert. Der Korrosionsinhibitor muß also eine solche Wasserlöslichkeit besitzen und genügend reversibel am Trägerstoff fixiert sein,
daß er vom durch den Beschichtungsfilm wandernden Wasser
in zumindest geringer Menge gelöst und mitgetragen werden
kann und somit an den zu schützenden Untergrund gelangt,
wo er die Korrosionsschutzwirkung erzielt.

Aus den obigen Darlegungen ergibt sich, daß der Korrosionsinhibitor eine gewisse Wasserlöslichkeit besitzen muß,
eventuell sogar gut wasserlöslich ist. Unter Korrosionsinhibitoren versteht man Substanzen, die dem angreifenden
Medium zugesetzt die Korrosionsgeschwindigkeit des zu
schützenden Werkstoffs vermindern. Sie bremsen entweder
nach Adsorption an der Metalloberfläche die anodische
oder kathodische Teilreaktion der Korrosion, oder schwächen
die Aggressivität des Korrosionsmittels auf physikalischem
oder chemischem Wege.

Physikalische Inhibitoren blockieren die zu schützende
Metalloberfläche, indem sie adsorbiert werden.

Chemische Inhibitoren reagieren entweder mit der Metalloberfläche und bilden eine Schutzschicht, oder reagieren
mit den aggressiven Bestandteilen des Korrosionsmediums,
indem sie aggressive Stoffe beseitigen (Chemisorbentien,
Passivatoren, Deckschichtbildner, elektrochemische Inhibitoren und Destimulatoren).

Wie bereits oben dargelegt, besitzt besonders große
technische Bedeutung der Schutz von Eisenoberflächen gegen Korrosion. Bevorzugt handelt es sich deshalb bei dem Korrosionsschutzpigment gemäß der Erfindung um ein Rostschutzpigment, d.h.
der Korrosionsinhibitor ist ein Rostinhibitor. Beispiele hierfür
sind Nitrit, Chinolin, Phenylthioharnstoff, Dibenzylsulfoxid,
Benzyl-Isochinolin, Tetraphenylphosphoniumbromid, 1-Octanphosphonsäure, Benzolstibonsäure, Phenyl-triallylarsoniumbromid,
Phenyl-α-naphthylarsinsäure, Natriumsilicat, Chromate.

Beim Schutz von Aluminiumoberflächen sind geeignete Korrisionsinhibitoren z.B. Kupferron, 1-Octadecylphosphonsäure, Diphenylsulfoxid, 1-Octadecylamin, 1,1o-Decamethylenbisphosphonsäure,
Azelainsäure, Alkylsulfamidocarbonsäure, Hexamethylentetramin,
Natriumsilicat, Chromate.

Beim Schutz von Zinkoberflächen sind geeignete Korrisonsinhibitoren z.B. Diphenylsulfoxid, Octadecylamin, Dicyclohexylhposphinsäuren, Triphenylphosphin, Ethylendicarbonsäure, Zimtsäure,
1-Octadecylamin, Debenzylketon, Dibenzylsulfoxid, Diphenylsulfoxid, Natriumsilicat, Chromate.

Häufig wird die Fixierung des Korrosionsinhibitors auf der Oberfläche des Trägerstoffs durch Adsorption erfolgen, d.h. der
Trägerstoff wird durch Adsorption mit dem Korrosionsinhibitor
beladen, der bei Berührung mit Wasser innerhalb des getrockneten
Beschichtungsfilms den Gesetzen der Adsorptionsgleichgewichtsverteilung zufolge anteilmäßig vom Wasser aufgenommen wird. Die
Erfindung ist aber nicht auf diesen Mechanismus beschränkt,
sondern jede Art einer zumindest teilweise reversiblen Fixierung
wird von der Erfindung umfaßt, z.B. kann der Inhibitor in einem
Kunststoffpulver gelöst sein und wird später von Wasser ausgelaugt.

Gegenstand der Erfindung ist weiterhin die Verwendung des oben
beschriebenen Korrosionsschutzpigments in Beschichtungsstoffen
und Beschichtungen für Metalle.

Außerdem sind Gegenstand der Erfindung die oben beschriebenen Korrosionsschutzpigmente enthaltenden Beschichtungsstoffe für Metalle. Beschichtungsstoffe und Beschichtungen im Sinne der Erfindung sind solche entsprechend der DIN-Norm 55945, z.B. Beschichtungsstoffe auf Alkydharz-, Epoxidharz-, Polyurethan-, Polyvinylbutyral-basis oder entsprechend vorgefertigte Folien.

Die Herstellung des Korrosionsschutzpigments kann in beliebiger Weise erfolgen, um einen Stoff zumindest teilweise reversibel auf einem anderen Stoff zu fixieren. Beispielsweise kann der Inhibitor als Lösung auf den Trägerstoff gebracht werden, z.B. durch Aufschlämmen, Aufsprühen, Aufdampfen.

Gemäß der vorliegenden Erfindung ist es überraschenderweise möglich, Korrosionsschutzpigmente zu schaffen, die Korrosionsinhibitoren enthalten, welche bisher bei unmittelbarem Zusatz zu Beschichtungsstoffen keine oder nur eine unwesentliche Korrosionsschutzwirkung ergaben. Es ist insbesondere möglich, flüssige Korrosionsinhibitoren mittels des erfindungsgemäßen Korrosionsschutzpigments in Beschichtungsstoffe einzuarbeiten.

Gut wasserlösliche Inhibitoren, dem Anstrichstoff unmittelbar zugegeben, würden bei Feuchtigkeitsbeanspruchung des Films über Osmose zur Blasenbildung führen. In erfindungsgemäß fixierter Form ist dieser Effekt wesentlich reduziert.

## Beispiel 1

### Herstellung des mit Inhibitor beladenen Trägerstoffes
35 Teile Celite-Superfloss wurden in 1oo ml Inhibitorlösung eingesumpft, 1o Minuten gerührt, anschließend wieder abfiltriert und durch Pressen zwischen Filtrierpapier vorgetrocknet. Anschließend wurde das so mit dem Inhibitor beladene Celite-Superfloss bei 50°C getrocknet.
Als Inhibitorlösung dienten:
a)    o,5 %-ige Zimtsäurelösung in Propanol
b)    o,5 %-ige Octadecylaminlösung in Xylol
c)    o,5 %-ige Dibenzylsulfoxidlösung in Propanol          - 7 -

Beispiel 2

**Einarbeitung des beladenen Trägerstoffes in ein Alkydharz-Grundierungsmaterial**

Der nach Beispiel 1 a, b bzw. c beladene Trägerstoff wurde in an sich bekannter Weise in eine marktgängige Alkydharzgrundierung als aktives Korrosionsschutzpigment eingearbeitet. Entsprechendes geschah mit unbehandeltem Celite-Superfloss, um einen Vergleich zu haben (Nullversuch).

**Herstellung von Prüfblechen**

Die so erhaltenen 4 Grundierungen wurden jeweils auf ein Stahlblech, Aluminiumblech und ein sendzimirverzinktes Blech aufgespritzt und getrocknet. Um auch die Korrosionsschutzwirkung im Lackieraufbau zu erproben, wurden die Bleche jeweils zur Hälfte mit einem Alkydharzdecklack überlackiert und getrocknet.

**Testergebnisse:**

Sowohl im Salzsprühtest nach DIN 53 167 (26 Tage) als auch im Feuchtwarmtest nach DIN 5o o17 (31 Tage) zeigten die den inhibitorbeladenen Trägerstoff enthaltenen Grundierungen auf Stahlbech und sendzimirverzinktem Blech ein deutlich besseres Korrosionsschutzergebnis als der Nullversuch.

Andere Inhibitoren, wie Propan-1,3-Diphosphonsäure, zeigten auch auf Aluminiumblechen deutliche Korrosionsschutzeffekte.

T 31 120

Patentansprüche:

==================

1.) Korrosionsschutzpigment, d a d u r c h   g e k e n n -
z e i c h n e t, daß es an einem pulverförmigen
Trägerstoff einen oder mehrere an sich bekannte
Korrosionsinhibitoren reversibel fixiert enthält.

2.) Korrosionsschutzpigment nach Anspruch 1, dadurch
gekennzeichnet, daß der Trägerstoff ein oberflächenaktiver Stoff ist.

3.) Korrosionsschutzpigment nach Anspruch 1 oder 2,
dadurch gekennzeichnet, daß der Trägerstoff eine
spezifische Oberfläche von mehr als 1o, vorzugsweise
mehr als 50 $m^2$/g besitzt.

4.) Korrosionsschutzpigment nach einem oder mehreren
der Ansprüche 1 bis 3, dadurch gekennzeichnet, daß der
Korrosionsinhibitor eine Wasserlöslichkeit von
mindestens 1 mg/l (bei 20° C besitzt.

5.) Verwendung des Korrosionsschutzpigments nach Anspruch 1
in Beschichtungsstoffen für Metalle.

6.) Korrosionsschutzpigment enthaltender Beschichtungsstoff für Metalle, dadurch gekennzeichnet, daß das Korrosionsschutzpigment ein pulverförmiger Trägerstoff ist, der einen
oder mehrere an sich bekannte Korrosionsinhibitoren
reversibel fixiert enthält.